# EUROPÄISCHE PATENTSCHRIFT

(11) **EP 0 477 834 B1**
(45) Veröffentlichungstag und Bekanntmachung des Hinweises auf die Patenterteilung: **21.12.1994**
(21) Anmeldenummer: 91116192.5
(22) Anmeldetag: 24.09.1991
(51) Int. Cl.: B66C 1/02, B66F 9/18

(54) **Vakuumheber**
Vacuum hoisting device
Dispositif de levage par vide

(30) Priorität: 26.09.1990 DE 9013528 U
(43) Veröffentlichungstag der Anmeldung: 01.04.1992
(73) Patentinhaber: Bartholomy & Co., D-52355 Düren (DE)
(72) Erfinder: Schmidt, Adolf, W-5160 Düren (DE)
(74) Vertreter: Paul, Dieter-Alfred, Dipl.-Ing.

(56) Entgegenhaltungen:
- EP-A- 0 108 725
- DE-A- 3 036 272
- DE-B- 1 152 858
- FR-A- 2 049 096
- FR-A- 2 152 957

## Beschreibung

Die Erfindung betrifft einen Vakuumheber zum Transport von eine Haftfläche aufweisenden Lasten mit wenigstens einer Saugplatte, die an ihrer Saugseite wenigstens eine vorstehende Ringdichtung aufweist, wobei der bzw. die von der bzw. den Ringdichtung(en) umschlossene Vakuumraum bzw. Vakuumräume an einem Hauptvakuumerzeuger angeschlossen ist bzw. sind und zusätzlich ein von einer Batterie versorgter Notvakuumerzeuger vorgesehen ist, der über einen Notschalter in Betrieb setzbar ist.

Solche Vakuumheber sind in der Regel für den Krananbau bestimmt, werden aber auch an gabelstaplerähnlichen Flurfördergeräten mit Hubmast, an Balanciergeräten, Manipulatoren, Rollenwender oder dergleichen angebracht. Dabei kommt auch eine Mehrfachanordnung in Frage. Mit ihnen lassen sich u.a. Rollen aus gewickelten Bändern, deren Material beispielsweise Papier, Metall, Kunststoff oder ein Laminat ist, anheben und befördern, und zwar je nach Formgebung des Saugkopfes durch stirnseitiges oder umfangsseitiges An- bzw. Aufsetzen an bzw. auf die liegende oder stehende Rolle. Auch flache Körper, wie beispielsweise Scheiben, lassen sich mit solchen Vakuumhebern umsetzen.

Ein gattungsgemäßer Vakuumheber ist beispielsweise in dem DE-GM 84 35 161.6 beschrieben. Er hat als Vakuumkopf eine ebene Saugplatte, an deren Unterseite konzentrisch mehrere Ringdichtungen im Abstand zueinander angeordnet sind. Diese Ringdichtungen bilden von diesen jeweils umschlossene, voneinander getrennte Vakuumräume, die beim Aufsetzen der Saugplatte auf die hierfür vorgesehene Haftfläche der für den Transport bestimmten Last abgedichtete Ringkammern bilden, soweit eine Abdeckung durch die Last vorhanden ist. Dabei müssen die Ringdichtungen nicht kreisförmig sein, sondern können jede andere Form, z.B. ovale oder eckige Form haben, solange sie nur einen geschlossenen Ring bilden. Es ist auch nicht erforderlich, daß sie ineinandergelegt sind. Sie können auch nebeneinanderliegende Vakuumräume umschließen oder auf mehrere Saugplatten verteilt sein. Die Vakuumräume sind über Öffnungen in der Saugplatte mit einem Hauptvakuumerzeuger, beispielsweise einer Vakuumpumpe, verbunden. In die Verbindung zum Hauptvakuumerzeuger ist jedem Vakuumraum - zumindest den Vakuumräumen, die außerhalb des innenliegenden Vakuumraums angeordnet sind - ein Ventil zugeordnet. Jedes Ventil ist mit einem Fühler gekoppelt, der die Größe der Haftfläche der Last beim Absenken des Vakuumhebers abtastet. Der Fühler ist jeweils so angeordnet, daß durch ihn das Ventil geöffnet wird, wenn die Haftfläche der Last so groß ist, daß der zugehörige Vakuumraum beim Aufsetzen auf die Haftfläche vollständig geschlossen wird.

In dem Artikel E. Fähnle und H. Hanke, Computergesteuertes Lagersystem Wöhr mit integriertem Bartholomy-Vakuumheber, Wochenblatt für Papierfabrikation 113, 1985, Nr. 14, Seite 523 bis 525 ist ein weiterentwickelter Vakuumheber offenbart, der neben dem Hauptvakuumerzeuger einen von einer Gleichstrombatterie betriebenen Notvakuumerzeuger hat. Dieser ist mit der normalen Stromzuführung derart gekoppelt, daß er automatisch in Gang gesetzt wird, wenn die Stromzuführung bei anhängender Last ausfällt. Auf diese Weise wird ein Absturz der Last während des Transports vermieden, wenn ein Stromausfall gegeben ist.

Gleichwohl war damit das Problem des ungewollten Absturzes einer transportierten Last nicht vollständig gelöst. Trotz voller Funktion des Hauptvakuumerzeugers, also bei gegebener Stromerzeugung, kam es zu Abstürzen. Außerdem konnten Rollen, die längere Zeit gelagert waren, nicht mehr sicher aufgenommen werden.

Der Erfindung liegt die Aufgabe zugrunde, einen Vakuumheber der eingangs genannten Art so auszubilden, daß Abstürze weitestgehend vermieden werden und eine sichere Aufnahme der Last gewährleistet ist.

Diese Aufgabe wird erfindungsgemäß dadurch gelöst, daß dem Vakuumraum bzw. wenigstens einem der Vakuumräume ein Druckaufnehmer zugeordnet ist, der mit dem Notschalter derart gekoppelt ist, daß der Notschalter im Vakuumbetrieb bei Überschreiten eines eingestellten Grenzdruckes automatisch den Notvakuumerzeuger einschaltet. Als Störungsmelder kommen dabei insbesondere optische oder akustische Signalgeber in Frage.

Erfindungsgemäß wird also ein eventueller Vakuumabfall und damit ein Abfall der Saugkraft erfaßt, damit bei Überschreiten eines eingestellten Grenzdruckes im Vakuumbetrieb, also bei anhängender Last entweder eine Störungsmeldung abgegeben wird, auf die dann eine Bedienungsperson mit Einschalten des Notvakuumerzeugers reagieren kann, oder der Notvakuumerzeuger automatisch eingeschaltet wird, wobei letzteres die sichere Methode ist. Dabei können beide Maßnahmen miteinander kombiniert werden, damit die Bedienungsperson Sicherheit darüber erhält, daß der Notvakuumerzeuger in Betrieb ist. Mit der Erfindung wird erreicht, daß auch dann, wenn trotz vorhandener Stromversorgung Absturzgefahr besteht, ein solcher Absturz durch Einschalten des Notvakuumhebers und damit Verstärkung der Vakuumkraft vermieden wird.

Die gilt auch schon für die Aufnahme einer Last. Insbesondere bei Papierrollen hat man nämlich festgestellt, daß ihre Luftdurchlässigkeit infolge viskoelastischen und hygroskopischen Verhaltens während der Lagerung und auf Grund vorangegangener Transportvorgänge zunimmt und deshalb der Hauptvakuumerzeuger überlastet wird, d. h. nicht eine ausreichende Haltekraft entwickeln kann. Durch Zuschalten des Notvakuumrerzeugers - sei es automatisch oder von Hand - können in Kombination mit dem Hauptvakuumerzeuger auch wesentlich luftdurchlässiger gewordene oder von vornherein sehr luftdurchlässige Lasten transportiert und damit der Anwendungsbereich des Vakuumhebers erweitert werden.

In Ausbildung der Erfindung ist vorgesehen, daß der Notvakuumerzeuger derart dimensioniert ist, daß bei gleichzeitigem Betrieb von Hauptvakuumerzeuger und Notvakuumerzeuger eine Verdoppelung des vom Hauptvakuumerzeuger allein bewirkten Vakuums erzeugbar ist.

Außerdem ist vorgeschlagen, daß der Notschalter mit einer Fernbedienungseinrichtung versehen ist, damit eine Bedienungsperson - gegebenenfalls unabhängig von der Automatik - eingreifen kann.

Ferner ist der Druckaufnehmer mit einem Störungsmelder derart gekoppelt, daß der Störungsmelder im Vakuumbetrieb bei Überschreitung eines eingestellten Grenzdruckes eingeschaltet wird.

Schließlich sieht die Erfindung vor, daß die Batterie mit einem an die Stromversorgung angeschlossenen Ladegerät verbunden ist, die die Batterie immer auf optimalem Ladestand hält.

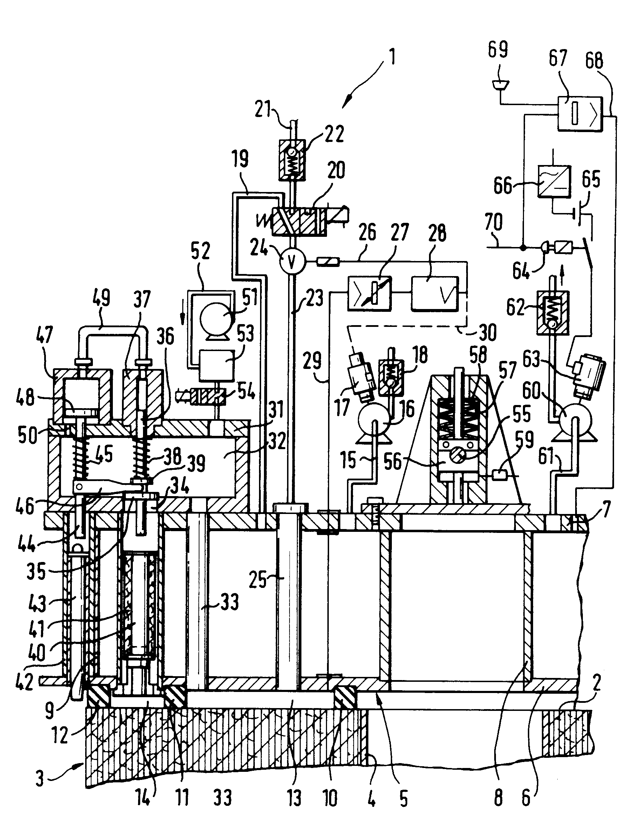

In der Zeichnung ist die Erfindung an Hand eines schematisch im Vertikalschnitt dargestellten Ausführungsbeispiels veranschaulicht. Sie zeigt den linken und mittleren Teil - der rechte Teil ist weggelassen - eines Vakuumhebers (1), der auf der Oberseite (2) einer senkrecht stehenden Papierrolle (3) sitzt, welche innenseitig eine Wickelhülse (4) aufweist. Auf diese Wickelhülse (4) ist die Papierbahn aufgewickelt.

Hauptteil des Vakuumhebers (1) ist ein Vakuumkessel (5), der von oben gesehen kreisrund ausgebildet ist. Er ist als vakuumdichte Schweißkonstruktion ausgeführt und hat als unteren Abschluß einen Saugplatte (6) und obenseitig eine Oberplatte (7). Im mittleren Bereich ist ein Mittelrohr (8) eingesetzt, das den inneren Abschluß des Vakuumkessels (5) bildet. Außenseitig wird der Vakuumkessel (5) von einer umlaufenden Seitenwandung (9) abgeschlossen.

An der Unterseite der Saugplatte (6) sind konzentrisch zur mittleren Vertikalachse des Vakuumhebers (1) drei kreisrunde Ringdichtungen (10̸, 11, 12) aus einem elastomeren Material angebracht. Mit diesen Ringdichtungen (10̸, 11, 12) sitzt der Vakuumheber (1) auf der Oberseite (2) der Papierrolle (3) auf. Die innenliegende Ringdichtung (10̸) hat einen solch großen Durchmesser, daß sie außerhalb der Wickelhülse (4) liegt, so daß über die Wickelhülse (4) keine Falschluft angesaugt werden kann. Mit der weiter außenliegenden, mittleren Ringdichtung (11) bildet die innenliegende Ringdichtung (10̸) einen ringförmigen, innenliegenden Vakuumraum (13). Die außenliegende Ringdichtung (12) bildet mit der mittleren Ringdichtung (11) einen weiteren, ringförmigen und außenliegenden Vakuumraum (14), der von dem innenliegenden Vakuumraum (13) durch die mittlere Ringdichtung (11) getrennt ist. Sofern der Vakuumheber (1) einen größeren Durchmesser hat, können nach außen hin weitere Vakuumräume in entsprechender Weise vorgesehen werden.

Der Vakuumkessel (5) steht über eine Vakuumleitung (15) mit einem Vakuumerzeuger (16) in Verbindung. Der Vakuumerzeuger (16) ist mit einer Drehzahlregeleinrichtung (17) verbunden und hat zudem ein Rückschlagventil (18). Der Vakuumerzeuger (16) hält den als Reservoir dienenden Vakuumkessel (5) ständig auf einem bestimmten Unterdruck.

Von dem Vakuumkessel (5) geht ein Vakuumrohr (19) aus, das zu einem Drei-Wege-Ventil (20̸) führt, das elektromagnetisch betätigbar ist. An das Drei-Wege-Ventil (20̸) ist ein Ausgang (21) - versehen mit einem Rückschlagventil (22) - angeschlossen, mit dem sich eine Verbindung zur freien Atmosphäre herstellen läßt. Ferner ist eine Rohrleitung (23) angeschlossen, in der ein Regelventil (24) angeordnet ist und die in ein Durchgangsrohr (25) mündet. Das Durchgangsrohr (25) durchsetzt den Vakuumkessel (5) und ist zum innenliegenden Vakuumraum (13) hin offen.

Das Regelventil ist mit einer Regelleitung (26) mit einem Meßwertumformer (28) verbunden, der mit einem Meßwertaufnehmer (27) zusammenarbeitet, welcher wiederum über eine den Vakuumkessel (5) durchsetzende Meßleitung (29) Verbindung zum innenliegenden Vakuumraum (13) hat. Eine weitere Steuerleitung (30̸) - gestrichelt dargestellt - ist mit der Drehzahlregeleinrichtung (17) verbunden.

In der gezeigten Stellung des Drei-Wege-Ventils (20̸) hat der Vakuumkessel (5) über das Vakuumrohr (19), das Drei-Wege-Ventil (20̸), die Rohrleitung (23), das Regelventil (24) und das Durchgangsrohr (25) Verbindung zu dem innenliegenden Vakuumraum (13). Er steht also unter vollem Vakuum, wobei das Vakuum mittels des Regelventils (24) auf einen bestimmten Wert eingestellt ist, der über die Meßleitung (29), den Meßwertaufnehmer (27) und den Meßwertumformer (28) erfaßt und an das Regelventil (24) als Regelgröße weitergegeben wird. Eine weitere Beeinflussung des Vakuums geschieht über die Drehzahlregeleinrichtung (17).

Soll das Vakuum im innenliegenden Vakuumraum (13) aufgehoben werden, wird das Drei-Wege-Ventil (20̸) umgeschaltet. Auf diese Weise erhält die Rohrleitung (23), das Durchgangsrohr (25) und damit der innenliegende Vakuumraum (13) über das Rückschlagventil (22) Verbindung zur Atmosphäre, d. h. der innenliegende Vakuumraum (13) wird belüftet. Gleichzeitig wird die vorher bestehende Verbindung zwischen Vakuumleitung (15) und Rohrleitung (23) unterbrochen, d. h. das Vakuum im Vakuumkessel (5) bleibt erhalten.

Im äußeren Bereich ist auf die Oberplatte (7) des Vakuumkessels (5) ein hohler Vakuumblock (31) aufgesetzt. Dessen Innenraum (32) hat über ein den Vakuumkessel (5) durchsetzendes Durchgangsrohr (33) Verbindung zum innenliegenden Vakuumraum (13), d. h. der Innenraum (32) hat immer denselben Druck, wie er im innenliegenden Vakuumraum (13) herrscht.

Der Vakuumblock (31) hat untenseitig eine Ventilöffnung (34), die mit einem Ventilteller (35) zusammenwirkt. Der Ventilteller (35) sitzt auf einer Ventilstange (36), die hohl ausgebildet und an ihrer Unter- und Oberseite offen ist. Die Ventilstange (36) sitzt mit ihrem oberen Ende in einer Ventilstangenführung (37). Eine weitere - hier nicht näher dargestellte - Ventilstangenführung ist im Bereich des unteren Endes der Ventilstange (36) vorgesehen. Die Ventilstange (36) ist im Bereich des Innenraumes (32) von einer druckausübenden Schraubenfeder (38) umgeben, die sich obenseitig an der Ventilstangenführung (37) und untenseitig an einem Bund (39) oberhalb des Ventiltellers (35) abstützt. Der Ventilteller (35) ist somit in Richtung auf die Ventilöffnung (34) druckfederbeaufschlagt.

Die Ventilöffnung (34) setzt sich nach unten hin in einem den Vakuumkessel (5) durchsetzenden Filterrohr (40̸) fort, das in den außenliegenden Vakuumraum (14) mündet. In dem Filterrohr (40̸) ist ein Filtereinsatz (41) angeordnet, durch den von dem außenliegenden Vakuumraum (14) kommende Saugluft strömen kann, wenn der Ventilteller (35) von der Ventilöffnung (34) abgehoben ist.

Außen an der Seitenwandung (9) des Vakuumkessels (5) ist ein Führungsrohr (42) angeordnet, in dem - relativ lose gehalten - ein Taststift (43) vertikal beweglich gelagert ist. Er liegt unmittelbar neben der Außenseite der außenliegenden Ringdichtung (12).

Oberhalb und in axialer Verlängerung des Taststiftes (43) ist eine Betätigungsstange (44) vakuumdicht in der unteren und der oberen Wandung des Vakuumblocks (31) gelagert. Er ist im Bereich des Innenraumes (32) des Vakuumblocks (31) von einer druckausübenden Schraubenfeder (45) umgeben, die die gleiche Federkraft entwickelt wie die Schraubenfeder (38) der Ventilstange (36). Die Schraubenfeder (45) stützt sich an der Oberwandung des Vakuumblocks (31) und untenseitig an einem starr an der Betätigungsstange (44) befestigten Gabelhebel (46) ab. Der Gabelhebel (46) erstreckt sich horizontal bis zur Ventilstange (36) und faßt dort zwischen dem Bund (39) und dem Ventilteller (35) formschlüssig ein. Auf diese Weise macht der Ventilteller (35) die Bewegungen der Betätigungsstange (44) mit.

Die Betätigungsstange (44) ragt nach oben aus dem Vakuumblock (31) in einen Ausgleichszylinder (47) hinein und weist dort endseitig einen in dem Ausgleichszylinder (47) abdichtend laufenden Ausgleichskolben (48) auf, dessen Kolbenfläche derjenigen des Ventiltellers (35) entspricht. Der oberhalb des Ausgleichskolbens (48) befindliche Raum steht über eine Ausgleichsleitung (49) mit der Ventilstangenführung (37) in Verbindung. Der Raum unterhalb des Ausgleichskolbens (48) hat über eine Ausgleichsbohrung (50) Verbindung zu dem Innenraum (32) des Vakuumblocks (31).

Bei größeren Vakuumhebern mit zusätzlichen, außenliegenden Vakuumräumen ist für jeden Vakuumraum eine vorbeschriebene Anordnung vorgesehen, wobei die jeweiligen Vakuumblöcke Verbindung zum jeweils nächsten innenliegenden Vakuumraum haben.

In der gezeigten Darstellung befindet sich der Taststift (43) in seiner untersten Stellung, weil der Durchmesser der Papierrolle (3) gerade eben mit dem Außendurchmesser der außenliegenden Ringdichtung (12) übereinstimmt. Beim Aufsetzen des Vakuumhebers (1) auf die Papierrolle (3) wird somit der Ventilteller (35) nicht hochgehoben. Dabei gleichen sich die auf den Ventilteller (35) in Öffnungsrichtung auf Grund des Vakuums im Innenraum (32) und die über die Ausgleichsbohrung (50̸) auf die Unterseite des Ausgleichskolbens (48) wirkenden Vakuumkräfte wegen des im wesentlichen übereinstimmenden Durchmessers von Ventilteller (35) und Ausgleichskolben (48) aus, d. h. die Betätigungsstange (44) und damit der Gabelhebel (46) wird mit einer Kraft nach unten gedrückt, die der Kraft entspricht, die auf den Ventilteller (35) in Öffnungsrichtung wirkt. Auf Grund dieses Ausgleichs wird der Ventilteller (35) lediglich durch die Schraubenfedern (38, 45) auf die Ventilöffnung (34) gedrückt.

Im Normalfall stimmt der Durchmesser der Papierrolle (3) nicht - wie dargestellt - exakt mit dem Außendurchmesser der außenliegenden Ringdichtung (12) überein. Ist der Durchmesser größer, wird der Taststift (43) beim Aufsetzen des Vakuumhebers (1) noch nicht betätigt, da er nach unten weniger vorsteht als die Ringdichtungen (10̸, 11, 12), selbst wenn sie durch das Eigengewicht des Vakuumhebers (1) etwas zusammengedrückt werden. Erst wenn das Dreiwege-Ventil (20̸) in die gezeigte Stellung gebracht und damit der Vakuumraum (13) mit dem vollen Vakuum beaufschlagt wird, werden die Ringdichtungen (10̸, 11, 12) derart stark komprimiert, daß der Taststift (43) an der Oberseite der Papierrolle zur Anlage kommt und sogar hochgedrückt wird. Dabei überbrückt er auch den Abstand zwischen seinem oberen Ende und dem unteren Ende der Betätigungsstange (44) und nimmt diese mit.

Über den Gabelhebel (46) wird dann der Ventilteller (35) von der Ventilöffnung (34) gegen die Wirkung der Schraubenfedern (38, 45) abgehoben. Auf diese Weise wird der außenliegende Vakuumraum (14) über das Filterrohr (40̸), die Ventilöffnung (34), den Vakuumblock (31) und das Durchgangsrohr (33) ebenfalls unter Vakuum gesetzt. Mit dem Abheben des Ventiltellers (35) findet an diesem auf der Ober- und Unterseite ein Druckausgleich statt, was ohne weitere Maßnahmen zur Folge hätte, daß die an der Unterseite des Ausgleichskolbens (48) wirkende Vakuumkraft bestrebt wäre, die Betätigungsstange (44) und damit auch die Ventilstange (36) wieder nach unten zu drücken. Da jedoch die Ventilstange (36) hohl ausgebildet und eine Verbindung zum Ausgleichszylinder (47) über die Ausgleichsleitung (49) besteht, wird auch der Raum oberhalb des Ausgleichskolbens (48) unter Vakuum gesetzt, so daß die zunächst bestehende Druckdifferenz aufgehoben wird.

Nach Absetzen der Papierrolle (3) wird - wie schon oben beschrieben - der innenliegende Vakuumraum (13) durch Betätigung des Drei-Wege-Ventils (20̸) belüftet. Diese Belüftung wirkt sich auch auf den Innenraum (32) des Vakuumblocks (31) und damit auf den außenliegenden Vakuumraum (14) aus, da der Ventilteller (35) noch geöffnet ist. Beim Abheben des Vakuumhebers (1) fährt der Taststift (43) wieder aus seinem Führungsrohr (42) heraus und senken sich der Ventilteller (35) und die Betätigungsstange (44) auf Grund der Wirkungen der Schraubenfedern (38) bzw. (45) wieder ab, bis der Ventilteller (35) die Ventilöffnung (34) geschlossen hat.

Die vorbeschriebene Situation setzt voraus, daß die Papierrolle (3) einen größeren als den gezeigten Durchmesser hat, so daß der Taststift (43) beim Aufsetzen angehoben wird. Im vorliegenden Ausführungsbeispiel ist dies nicht der Fall, so daß der Taststift (43) in seiner nach unten herausragenden Stellung verbleibt. Dies hat zur Folge, daß die Ventilöffnung (34) geschlossen bleibt, obwohl der außenliegende Vakuumraum (14) durch die Oberseite (2) der Papierrolle (3) geschlossen ist und unter Vakuum gesetzt werden könnte. Der innenliegende Vakuumraum (13) ist jedoch von seiner Fläche so berechnet, daß in diesen Fällen die von ihm ausgehende Saugkraft ausreicht, um die Papierrolle (3) anzuheben und hängend zu transportieren, so daß es der Vakuumbeaufschlagung des außenliegenden Vakuumraums (14) in solchen Fällen nicht bedarf. Beim Absetzen und anschließenden Anheben des Vakuumhebers (1) entsteht jedoch das Problem, daß durch das Ausfedern der Ringdichtungen (11, 12) in dem außenliegenden Vakuumraum (14) ein Vakuum entsteht, da hier - im Gegensatz zum belüfteten innenliegenden Vakuumraum (13) - keine Luft nachfließen kann. Dies kann dazu führen, daß die Papierrolle (3) beim Anheben des Vakuumhebers (1) eine gewisse Strecke mitgenommen wird, bis das sich im außenliegenden Vakuumraum gebildete Vakuum durch Luft, die durch das Material der Papierrolle (3) langsam nachfließt, so weit aufgehoben ist, daß die Papierrolle (3) nicht mehr getragen wird. Sie stürzt dann unkontrolliert ab.

Um dies zu vermeiden, ist ein Preßlufterzeuger (51) vorgesehen, der über eine Preßluftleitung (52) mit einem Preßluftreservoir (53) und über ein Magnetventil (54) mit dem Innenraum (32) des Vakuumblocks (31) verbunden ist. Normalerweise ist das Magnetventil (54) geschlossen. Nach dem Absetzen der Papierrolle (3) und Umschaltung des Drei-Wege -Ventils in die Belüftungsstellung wird das Magnetventil (54) durch eine hier nicht näher dargestellte, automatische Steuerung geöffnet, wenn sich der Druck im Vakuumraum (13) auf nahezu freien Atmosphärendruck erhöht hat. Damit wird der Innenraum (32) des Vakuumblocks (31) und über das Durchgangsrohr (33) der innenliegende Vakuumraum (13) unter Überdruck gesetzt. Ein Abfließen der Luft über die Rohrleitung (23) und das in Belüftungsstellung befindliche Drei-Wege-Ventil (20̸) wird durch das Rückschlagventil (22) verhindert. Der sich in dem innenliegenden Vakuumraum (13) aufbauende Überdruck reicht aus, um den Vakuumheber (1) von der Papierrolle (3) abzuheben und die sich dabei in dem außenliegenden Vakuumraum (14) auf Grund der Ausfederung der Ringdichtungen (11, 12) bildende Vakuumkraft zu überwinden. Es kommt dann nicht mehr zu einer ungewollten Mitnahme der Papierrolle (3). Die Preßluftzufuhr wird sofort gestoppt, nachdem der Vakuumheber (1) abgehoben ist, was durch entsprechende Drucksensoren automatisch gesteuert wird.

Der Vakuumheber (1) ist - was hier nicht näher dargestellt ist - an einem Kranlaufwerk zentrisch aufgehängt. Dessen Unterflasche ist dabei mit einem Tragbolzen (55) verbunden, der über Kulissensteine (56) beweglich in einer Vertikalführung (57) gelagert ist. Untenseitig ist der Tragbolzen (55) verbreitert und stützt sich hierüber nach oben hin an einer Tellerfeder (58) ab. Im unteren Teil der Vertikalführung (57) ist ein Endschalter (59) angeordnet, der betätigt wird, wenn die Kulissensteine (56) ihre untere Endstellung erreichen. Der Endschalter (59) ist über eine hier nicht näher dargestellte Steuerung mit dem Drei-Wege-Ventil (20̸) gekoppelt.

Wenn die Papierrolle (3) abgesetzt wird, wird das Kranlaufwerk schlaff mit der Folge, daß sich die Kulissensteine (56) mit dem Tragbolzen (55) nach unten hin absenken. Mit Betätigen des Endschalters (59) wird das Drei-Wege-Ventil (20̸) aus der gezeigten Stellung, in der der innenliegende Vakuumraum (13) unter Vakuum steht, in die Belüftungsstellung umgeschaltet, so daß automatisch der innenliegende Vakuumraum (13) Verbindung zur Atmosphäre bekommt. Ein weiterer, hier nicht näher dargestellter Endschalter ist mit dem Kranlaufwerk als Schlaffseilsicherung verbunden und schaltet es automatisch ab. Zusätzlich kann der Endschalter (59) auch noch mit dem Magnetventil (54) des Preßlufterzeugers (51) verbunden sein, so daß gleichzeitig der innenliegende Vakuumraum (13) nicht nur belüftet, sondern auch mit Druckluft versorgt wird. Der Vakuumheber (1) kann dann von der Papierrolle (3) abgehoben werden.

Eine Steuerung sorgt dafür, daß, wenn die Kulissensteine (56) den Endschalter (59) verlassen, das Drei-Wege-Ventil (20̸) nicht umgeschaltet wird, vielmehr diese Umschaltung erst nach einem erneuten Absenken des Vakuumhebers (1) auf eine andere Papierrolle und damit ein Absinken der Kulissensteine (56) auf den Endschalter (59) erfolgt. Es kann jedoch auch eine andere Logikschaltung vorgesehen werden bzw. eine Zurückstellung des Drei-Wege-Ventils in die Vakuumstellung nur durch die Bedienungsperson möglich sein.

Der Vakuumheber (1) weist zusätzlich einen Notvakuumerzeuger (60̸) auf, der über eine Notvakuumleitung (61) mit dem Innenraum des Vakuumkessels (5) verbunden ist. Der Notvakuumerzeuger (60̸) ist ebenfalls durch ein Rückschlagventil (62) gesichert. Der Notvakuumerzeuger (60̸) wird von einem Gleichstrommotor (63) angetrieben, der über einen Druckschalter (64) mit einer Batterie (65) verbunden ist. Die Batterie (65) liegt an einem mit der Stromversorgung ständig verbundenen Batterie-Ladegerät (66) an und wird auf diese Weise fortlaufend auf bestem Ladezustand gehalten.

Der Druckschalter (64) ist mit einem Meßwertaufnehmer (67) verbunden, der über eine Meßleitung (68) Verbindung zum Innenraum des Vakuumkessels (5) hat. Der Meßwertumformer (67) ist so eingestellt, daß er dem als Magnetschalter ausgebildeten Druckschalter (64) einen Impuls zum Schließen gibt, wenn über die Meßleitung (68) festgestellt wird, daß das Vakuum im Vakuumkessel (5) einen bestimmten Mindestwert überschreitet. Dies setzt den Gleichstrommotor (63) und damit den Notvakuumerzeuger (60̸) in Gang, so daß der Abfall des Vakuums im Vakuumkessel (5) wieder kompensiert und das normale Vakuumniveau wieder erreicht wird. Gleichzeitig wird eine Störungsmeldung über einen Signalgeber (69) abgegeben, damit die Bedienungsperson sicher weiß, daß das vom Vakuumerzeuger (16) erzeugte Vakuum für den Transport der Papierrolle (3) nicht ausreichend ist.

Von dem Druckschalter (64) geht noch eine Fernbetätigungsleitung (70̸) aus, über die eine Bedienungsperson den Druckschalter (64) auch unabhängig oder alternativ zu der vorbeschriebenen Automatik betätigen und damit den Notvakuumerzeuger (60̸) in Ganz setzen kann.

Ein Vakuumabfall kann beispielsweise durch Ausfall des Vakuumerzeugers (16) oder auch dadurch entstehen, daß sich die Vakuumgreifeigenschaften einer Papierrolle (3) als Folge ihres zeitabhängigen, viskoelastischen und hygroskopischen Verhaltens so weit verschlechtert haben, daß der Vakuumerzeuger (16) nicht mehr für die Vakuumerzeugung ausreicht. In diesem Fall wirkt der Notvakuumerzeuger (60̸) unterstützend. Zusätzlich kann vorgesehen sein, daß der Notvakuumerzeuger (60̸) auch durch eine Bedienungsperson zugeschaltet wird, wenn dies erforderlich erscheint.

Im übrigen ist unter Vakuum im Sinne dieser Beschreibung ein Druck zu verstehen, der geringer ist als der freie Atmosphärendruck.

## Patentansprüche

1. Vakuumheber zum Transport von eine Haftfläche aufweisenden Lasten (3) mit einer Saugplatte (5), die an ihrer Saugseite wenigstens eine vorstehende Ringdichtung (10,11,12) aufweist, wobei der bzw. die von der bzw. den Ringdichtung(en) (10,11,12) umschlossene Vakuumraum bzw. Vakuumräume (13,14) an einen Hauptvakuumerzeuger (16) angeschlossen ist bzw. sind und zusätzlich ein von einer Batterie (65) versorgter Notvakuumerzeuger (60) vorgesehen ist, der über einen Notschalter (64) in Betrieb setzbar ist,
dadurch gekennzeichnet, daß dem Vakuumraum bzw. einem der Vakuumräume (13) ein Druckaufnehmer (67) zugeordnet ist, der mit dem Notschalter (64) derart gekoppelt ist, daß der Notschalter (64) im Vakuumbetrieb bei Überschreiten eines eingestellten Grenzdruckes automatisch den Notvakuumerzeuger (60̸) einschaltet.

2. Vakuumheber nach Anspruch 1,
dadurch gekennzeichnet, daß der Notschalter (64) mit einer Fernbedienungseinrichtung (70̸) versehen ist.

3. Vakuumheber nach einem der Ansprüche 1 bis 2,
dadurch gekennzeichnet, daß der Notvakuumerzeuger (60̸) derart dimensioniert ist, daß bei gleichzeitigem Betrieb von Hauptvakuumerzeuger (16) und Notvakuumerzeuger (60̸) eine Verdoppelung des Vakuums erzeugbar ist.

4. Vakuumheber nach einem der Ansprüche 1 bis 3,
dadurch gekennzeichnet, daß die Batterie (65) mit einem an die Stromversorgung angeschlossenen Ladegerät (66) verbunden ist.

5. Vakkumheber nach einem der Ansprüche 1 bis 4,
dadurch gekennzeichnet, daß der Druckaufnehmer (67) mit einem Störungsmelder (69) derart gekoppelt ist, daß der Störungsmelder (69) im Vakuumbetrieb bei Überschreitung eines eingestellten Grenzdrucks eingeschaltet wird.

## Claims

1. A vacuum lifter for transporting loads (3) having an adherent surface, with a suction plate (5) which has at least one protruding ring seal (10, 11, 12) on its suction face, wherein the vacuum space or vacuum spaces (13, 14) enclosed by the ring seal (10, 11, 12) is or are connected to a main vacuum generator (16) and in addition an emergency vacuum generator (60) is provided, which can be set in operation via an emergency switch (64) and which is supplied by a battery (65), characterised in that a pressure sensor (67) is associated with the vacuum space or with one of the vacuum spaces (13) and is coupled to the emergency switch (64) in such a way that in vacuum operation the emergency switch (64) automatically switches on the emergency vacuum generator (60) when a set limiting pressure is exceeded.

2. A vacuum lifter according to claim 1, characterised in that the emergency switch (64) is provided with a remote control device (70).

3. A vacuum lifter according to either one of claims 1 to 2, characterised in that the emergency vacuum generator (60) is sized so that a doubling of the vacuum can be produced when the main vacuum generator (16) and the emergency vacuum generator (60) are operated simultaneously.

4. A vacuum lifter according to any one of claims 1 to 3, characterised in that the battery (65) is connected to a charging unit (66) connected to the power supply.

5. A vacuum lifter according to any one of claims 1 to 4, characterised in that the pressure sensor (67) is coupled to a fault indicator (69) in such a way that the fault indicator (69) is switched on in vacuum operation when a set limiting pressure is exceeded.

## Revendications

1. Appareil de levage par le vide qui est destiné au transport de charges (3) pourvues d'une surface d'accrochage et qui comprend une plaque d'aspiration (5) présentant au moins un joint d'étanchéité annulaire (10, 11, 12) en saillie sur son côté d'aspiration, cependant que la chambre à vide ou les chambres à vide (13, 14), respectivement, qui est entourée ou qui sont entourées, respectivement, par le joint d'étanchéité annulaire ou par les joints d'étanchéité annulaires (10, 11, 12), respectivement, est raccordée ou sont raccordées, respectivement, à un générateur de vide principal (16), et qu'il est prévu en supplément un générateur de vide de secours (60) qui est alimenté par une batterie (65) et qui peut être mis en marche par l'intermédiaire d'un interrupteur de secours (64), caractérisé par le fait qu'est associé à la chambre à vide ou à l'une des chambres à vide (13), respectivement, un capteur de pression (67) qui est accouplé à l'interrupteur de secours (64) d'une manière telle que l'interrupteur de secours (64) mette en marche automatiquement le générateur de vide de secours (60), lors du fonctionnement sous vide, lorsque l'on dépasse une pression limite prédéterminée.

2. Appareil de levage par le vide selon la revendication 1, caractérisé par le fait que l'interrupteur de secours (64) est pourvu d'un dispositif de télécommande (70).

3. Appareil de levage par le vide selon l'une des revendications 1 et 2, caractérisé par le fait que le générateur de vide de secours (60) est dimensionné d'une manière telle que l'on puisse engendrer un doublement du vide lorsque le générateur de vide principal (16) et le générateur de vide de secours (60) fonctionnent en même temps.

4. Appareil de levage par le vide selon l'une des revendications 1 à 3, caractérisé par le fait que la batterie (65) est reliée à un chargeur (66) qui est raccordé à l'alimentation en courant.

5. Appareil de levage par le vide selon l'une des revendications 1 à 4, caractérisé par le fait que le capteur de pression (67) est accouplé à un indicateur de perturbations (69) d'une manière telle que l'indicateur de perturbations (69) soit mis en marche, lors du fonctionnement sous vide, lorsque l'on dépasse une pression limite prédéterminée.
